# EUROPÄISCHE PATENTSCHRIFT

(11) **EP 3 555 462 B1**
(45) Veröffentlichungstag und Bekanntmachung des Hinweises auf die Patenterteilung: **31.07.2024**
(21) Anmeldenummer: 17823084.3
(22) Anmeldetag: 15.12.2017
(51) Int. Cl.: F03D 7/02

(54) **VERFAHREN ZUM STEUERN EINER WINDENERGIEANLAGE**
METHOD FOR CONTROLLING A WIND TURBINE
PROCÉDÉ PERMETTANT DE COMMANDER UNE ÉOLIENNE

(30) Priorität: 16.12.2016 DE 102016124630
(43) Veröffentlichungstag der Anmeldung: 23.10.2019
(73) Patentinhaber: Wobben Properties GmbH, 26607 Aurich (DE)
(72) Erfinder: HARMS, Harro, 26639 Wiesmoor (DE); BERGEMANN, Constantin, 22763 Hamburg (DE)
(74) Vertreter: Eisenführ Speiser
(86) Internationale Anmeldenummer: PCT/EP2017/082946
(87) Internationale Veröffentlichungsnummer: WO 2018/109141

(56) Entgegenhaltungen:
- EP-A2- 2 685 095
- US-A1- 2010 301 605
- US-A1- 2013 033 040
- US-A1- 2013 129 508

## Beschreibung

Die vorliegende Erfindung betrifft ein Verfahren zum Steuern einer Windenergieanlage. Sie betrifft auch ein Verfahren zum Auslegen einer Windenergieanlage. Außerdem betrifft sie eine Windenergieanlage.

Windenergieanlagen sind bekannt und die vorliegende Erfindung betrifft besonders übliche, sog. Horizontalachsenwindenergieanlagen, bei denen sich ein aerodynamischer Rotor mit wenigstens einem, meist drei Rotorblättern um eine im Wesentlichen horizontale Rotorachse dreht. Im Betrieb der Windenergieanlage wird diese mit ihrem Rotor bzw. entsprechend mit der Rotorachse zum Wind ausgerichtet. Sie wird also mit ihrer Azimutposition in den Wind ausgerichtet. Außerdem wird eine Windenergieanlage zugrundegelegt, deren Rotorblätter jeweils in ihrem Blattwinkel verstellbar sind. Dabei werden die Rotorblätter um ihre Längsachse verstellt, um ihre Stellung der jeweiligen Betriebsbedingung anzupassen.

Wenn die Windenergieanlage nicht in Betrieb ist, zumindest keinen Strom erzeugt, werden die Rotorblätter üblicherweise in eine Fahnenstellung gedreht, um dadurch besonders in einem Sturmfall möglichst wenig Angriffsfläche für einen solchen Sturm zu bieten. Eine Fahnenstellung ist dabei eine solche, bei der die Rotorblätter im Wesentlichen um 90 Grad gegenüber einer Betriebsstellung im Teillastbetrieb verdreht werden. Vereinfacht ausgedrückt stehen sie dann etwa parallel zum Wind, zumindest jeweils in einem Abschnitt jedes Rotorblatts.

Dabei ist zu beachten, dass die Richtung, aus der ein solcher Sturm kommen kann, regelmäßig nicht vorher bekannt ist und somit trotz Fahnenstellung bei ungünstiger Windrichtung eines solchen Sturms dennoch eine hohe Belastung auftreten kann. Um das zu adressieren, kann vorgesehen sein, die Windenergieanlage auch dann, wenn sie nicht in Betrieb ist, wenn sie also nicht aktiv Strom erzeugt, in ihrer Azimutrichtung in den Wind auszurichten.

Aber auch eine solche Verstellung der Azimutposition kann immer noch, je nachdem, wie ein Sturm auftritt, zu einer hohen Belastung der Windenergieanlage führen. Besonders problematisch kann es sein, wenn innerhalb eines Sturmes unterschiedliche Windrichtungen auftreten, so dass es zu so genannten Schräganströmungen kommt.

Das Deutsche Patent- und Markenamt hat in der Prioritätsanmeldung zu vorliegender Anmeldung folgenden Stand der Technik recherchiert: DE 10 2014 223 640 A1, US 2014/0010651 A1 sowie den Artikel "Hurricane-Induced Loads on Offshore Wind Turbines with Considerations for Nacelle Yaw and Blade Pitch Control" von E. Kim et al., Wind Engineering, Volume 38, 2014, Seiten 413-423. Das Dokument US 2013/129508 A1 ist ein weiterer Stand der Technik.

Aufgabe der vorliegenden Erfindung ist es somit, zumindest eines der oben beschriebenen Probleme zu adressieren. Insbesondere soll eine Lösung vorgeschlagen werden, bei der die Windenergieanlage möglichst stark vor mechanischen Belastungen eines Sturmfalls geschützt wird. Zumindest soll zu bisher bekannten Lösungen eine alternative Lösung vorgeschlagen werden.

Erfindungsgemäß wird ein Verfahren nach Anspruch 1 vorgeschlagen, nämlich ein Verfahren zum Steuern einer Windenergieanlage. Dabei ist hier Steuern nicht im strengen regelungstechnischen Sinne zu verstehen, sondern im Sinne einer Anlagensteuerung, die verschiedene Anlagenteile steuern kann, was eine Informationsrückführung beinhalten kann.

Das Verfahren geht somit von einer Windenergieanlage aus, die einen aerodynamischen Rotor mit Rotorblättern aufweist, die in ihrem Blattwinkel verstellt werden können. Ein solches Verstellen eines Blattwinkels eines Rotorblattes wird auch als Pitchen bezeichnet.

Außerdem ist der aerodynamische Rotor in seiner Azimutrichtung verstellbar, was üblicherweise dadurch erfolgen kann, dass die gesamte Gondel, an der der aerodynamische Rotor installiert ist, in ihrer Azimutrichtung, also in ihrer Ausrichtung zum Wind, verstellt wird.

Das Verfahren schlägt nun zunächst vor, einen Sturmfall zu erfassen. Ein Sturmfall liegt hierbei dann vor, wenn der vorherrschende Wind so stark ist, dass zum Eigenschutz die Windenergieanlage in einem Trudelbetrieb gebracht wird. Die Windenergieanlage erzeugt dann also keinen Strom mehr und dem Rotor wird ermöglicht, sich frei zu drehen. Die Rotorblätter sind dabei aber so eingestellt, dass der aerodynamische Rotor, der hier vereinfachend einfach nur als Rotor bezeichnet wird, nicht gezielt vom Wind angetrieben wird. Besonders wird der Rotor aber auch nicht festgesetzt.

Außerdem wird wenigstens eine durch eine Böe auf den Rotor wirkende Belastung erfasst. Besonders kann dies durch eine Belastungsmessung an jedem Rotorblatt wie bspw. in einem Wurzelbereich jedes Rotorblattes erfolgen. Der Einfachheit halber kann jede hier erfasste Belastung als durch eine Böe auf den Rotor wirkende Belastung angesehen und weiterverarbeitet werden, sofern das beschriebene Verfahren zum Steuern der Windenergieanlage aktiviert ist. Es kann aber auch eine Belastungshöhe als Grenzwert zugrundegelegt werden, um eine durch eine Böe auf den Rotor wirkende Belastung zu erkennen bzw. als solche anzusehen und entsprechend weiter zu verarbeiten.

Es wird nun vorgeschlagen, wenigstens eines der Rotorblätter in seinem Blattwinkel zu verstellen, also zu Pitchen, wobei dies so erfolgt, dass das wenigstens eine Rotorblatt eine möglichst geringe Belastung durch die erfasste Belastung erfährt.

Besonders kommt hier in Betracht, dass eine Belastung auf ein Rotorblatt dem Betrage und der Richtung nach erfasst wird und das Rotorblatt aus dieser Böe heraus oder zumindest teilweise herausgedreht wird. Das kann auch so erläutert werden, dass das Rotorblatt in Bezug auf diese Böe, deren Belastung erfasst wurde, in eine individuelle Fahnenstellung gedreht wird. Das kann besonders auch bedeuten, dass das Rotorblatt, je nachdem aus welcher Richtung diese Böe kommt, über eine Fahnenstellung in Bezug auf die Hauptwindrichtung, die hier zu besseren Unterscheidbarkeit Haupt-Fahnenstellung genannt werden kann, hinausgedreht wird. Ist diese Haupt-Fahnenstellung bezogen auf die Hauptwindrichtung bspw. ein Wert von 90 Grad, so wird vorgeschlagen, je nach Belastungsrichtung das Blatt über diese 90 Grad hinaus auf einen höheren Wert zu drehen oder auf einen geringeren Wert als diese 90 Grad zu drehen, um bei diesem Beispiel zu bleiben.

Damit wurde besonders auch erkannt, dass eine Böe nicht unbedingt aus der Hauptwindrichtung kommen muss, sondern den Rotor schräg anströmen kann. Dann ist die Haupt-Fahnenstellung der Rotorblätter in Bezug auf die Hauptwindrichtung, wenn die Windenergieanlage in ihrer Azimutposition in die Hauptwindrichtung ausgerichtet ist, keine individuelle Fahnenstellung in Bezug auf eine aus einer anderen Richtung kommende Böe. Dem wird durch die vorgeschlagene Verstellung des Rotorblattes Rechnung getragen. Die Ausrichtung des Rotors in seiner Azimutposition, also seine Azimutausrichtung, kann dabei beibehalten werden.

Erfindungsgemäß wird vorgeschlagen, dass das Verstellen des wenigstens einen Rotorblattes in seinem Blattwinkel erst erfolgt, wenn die verursachende Böe eine Windgeschwindigkeit aufweist, die wenigstens um eine vorbestimmte Windgeschwindigkeitsdifferenz oberhalb einer mittleren Windgeschwindigkeit des vorherrschenden Windes liegt. Außerdem wird eine Sicherheitsüberprüfung aufgehoben, die die Verstellung des wenigstens einen Rotorblattes begrenzt, so dass jedes Rotorblatt abhängig der erfassten Böe sowohl größere als auch kleinere Blattwinkel als die Fahnenstellung annehmen kann.

Somit kann jedes Rotorblatt abhängig der erfassten Böe sowohl größere als auch kleinere Blattwinkel als die Fahnenstellung annehmen, nämlich als die Haupt-Fahnenstellung. Bisher war es üblich, ein Verstellen des Rotorblattes von seiner Betriebsstellung im Teillastbetrieb, wenn der Blattwinkel etwa 0 Grad oder wenige Grad beträgt, bis hin zur Fahnenstellung, die regelmäßig etwa bei 90 Grad liegt, zu begrenzen. Eine solche Begrenzung war regelmäßig auch durch einen mechanischen Schalter vorgegeben, der ein Überdrehen des Rotorblattes verhindert. Hier wird nun vorgeschlagen, auf einen solchen Schalter zu verzichten und ein Drehen auch deutlich über diese 90 Grad-Stellung hinaus zuzulassen, insbesondere ein Drehen über eine 100° Stellung zuzulassen. Die genannte Sicherheitsüberprüfung, die hiermit aufgehoben werden soll, kann stattdessen durch entsprechende Software, vorzugsweise durch eine redundante Softwareüberprüfung ersetzt werden. Vorzugsweise beinhaltet eine solche Überprüfung, ob der Entlastungsmodus aktiviert ist oder nicht. Demnach wird bei aktiviertem Entlastungsmodus ein Überdrehen jedes Rotorblattes deutlich über die Hauptfahnenstellung hinaus zugelassen, wohingegen bei deaktiviertem Entlastungsmodus ein solches über die Hauptfahnenstellung hinaus Verstellen des Rotorblattes zu einer Fehlermeldung oder zumindest zu einer Warnmeldung führen kann.

Vorzugweise wird das wenigstens eine Rotorblatt in Abhängigkeit einer erfassten Blattbelastung verstellt, wobei die erfasste Blattbelastung in eine Lastregelung eingeht und die Lastregelung in Abhängigkeit der erfassten Belastung den Winkel des betreffenden Rotorblattes so verstellt, dass die Belastung minimiert wird. Es wird hier also eine Regelung oder Regelungsschleife vorgeschlagen, die in Abhängigkeit der Belastung die Blattverstellung vornimmt. Dazu kann ein Soll-Ist-Wertvergleich der Belastung vorgenommen werden. Vorzugsweise beträgt dabei der Sollwert der Belastung den Wert 0. Die erfasste Belastung kann dabei auch vorzeichenbehaftet berücksichtigt werden. Dazu kann von zwei möglichen Belastungsrichtungen eine als positive Belastung und die andere als negative Belastung festgelegt werden und die positive Belastung kann dann zu einer Verstellung des Rotorblatts in eine Richtung und eine negative Belastung zu einer Verstellung des Rotorblatts in eine dazu entgegensetzte Richtung führen.

Die hierbei verwendete Belastungserfassung kann mit der Erfassung der durch die Böe verursachten Belastung übereinstimmen.

Vorzugsweise wird hierzu vorgeschlagen, einen PI-Regler zu verwenden. Dieser kann so vorgesehen sein, dass der beschriebene Soll-Ist-Wertvergleich zwischen Soll-Belastung und Ist-Belastung auf ein PI-Glied gegeben wird, das als Ausgangswert einen Sollwinkel liefert. Dieser Sollwinkel kann bspw. eine Abweichung von einer Fahnenstellung bezeichnen, so dass also der Wert 0 der Fahnenstellung, nämlich der Haupt-Fahnenstellung entspricht. Wenn der Belastungssollwert 0 ist, kann auch die erfasste Belastung unmittelbar auf das PI-Glied gegeben werden.

Gemäß einer Ausführungsform wird für die bzw. als Lastregelung ein PD-Regler vorgesehen. Durch einen solchen PD-Regler kann eine schnelle Reaktion auf eine schnell auftretende und sich schnell ändernde Belastung erreicht werden und es wurde erkannt, dass besonders mit schnell auftretenden und sich schnell ändernden Belastungen zu rechnen ist. Es wurde auch erkannt, dass sich in dem zu Grunde liegenden Sturmfall der Wind ständig ändern wird und daher eine Auslegung eines Reglers auf eine stationäre Genauigkeit nicht unbedingt erforderlich ist.

Vorzugsweise wird vorgeschlagen, dass beim Ausrichten des Rotors in die belastungsarme Ausrichtung zum Wind die Rotorblätter in eine Fahnenstellung gebracht werden und davon ausgehend jedes Rotorblatt individuell in seinem Blattwinkel um eine Winkelabweichung zur Fahnenstellung verstellt wird. Es wird hierbei besonders vorgeschlagen, dass diese Fahnenstellung, die sich auf die Hauptwindrichtung bezieht, die Ausgangsstellung für die belastungsreduzierende Winkelverstellung ist. Auch die vorgeschlagene Verstellung kann sich auf diese Fahnenstellung, also die Haupt-Fahnenstellung beziehen und entsprechende Stellgrößen können mit Bezug auf diese Fahnenstellung vorgegeben bzw. festgelegt werden.

Gemäß einer Ausführungsform wird vorgeschlagen, dass für jedes Rotorblatt wenigstens ein Lastsensor vorgesehen ist. Das kann bspw. ein Dehnungsmessstreifen sein, um nur ein Beispiel zu nennen. Dieser wenigstens eine Lastsensor kann am Rotorblatt, besonders im Bereich Blattwurzel des Rotorblattes vorgesehen sein, oder im Bereich einer Befestigung des Rotorblattes an der Rotornabe. Bspw. kommt in Betracht, dass das Rotorblatt über einen Blattadapter an der Rotornabe befestigt ist. In diesem Fall kann der Lastsensor auch an dem Blattadapter angeordnet sein, oder in einem Übergang vom Rotorblatt zum Blattadapter oder an einem Übergangsbereich vom Rotorblatt oder vom Blattadapter zur Nabe. Jedenfalls ist dieser Lastsensor dazu vorgesehen, individuell eine Belastung des betreffenden Rotorblattes zu erfassen.

Von diesem Lastsensor wird ein Lastsignal erzeugt, das zu einer Regelungsvorrichtung des Rotorblattes zurückgeführt wird. Es ist also eine Regelungsvorrichtung für jedes Rotorblatt vorgesehen oder im Falle einer zentralen Regelungsvorrichtung ist zumindest für jedes einzelne Rotorblatt eine individuelle regelungstechnische Berücksichtigung vorgesehen. Diese Rückführung des Lastsignals zu der Regelungsvorrichtung soll genutzt werden, um abhängig davon das Verstellen des Rotorblattes durchzuführen, um eine durch dieses Lastsignal erfasste Belastung zu minimieren oder zumindest zu reduzieren. Somit wird eine individuelle Regelung jedes Rotorblattes basierend auf dem Lastsignal jedes einzelnen Rotorblattes vorgeschlagen. Damit kann besonders gut ein Entlastungsmodus individuell für jedes Rotorblatt umgesetzt werden.

Vorzugsweise ist dafür eine Signalübertragungseinrichtung vorgesehen, die ein solches Lastsignal von dem Lastsensor zur Regelungsvorrichtung überträgt. Vorzugsweise ist eine solche Signalübertragungseinrichtung für jedes Rotorblatt vorgesehen und diese können leitungsgebunden sein und/oder eine Datenübertragung ohne Leitung vorsehen. Vorzugsweise ist für jedes Rotorblatt eine eigene Regelungsvorrichtung vorgesehen und diese ist vorzugsweise benachbart zu einer Blattverstelleinrichtung zum Verstellen des Rotorblattes angeordnet. Somit kann für jedes einzelne Rotorblatt mit dem Lastsensor eine Belastung erfasst werden und an die Regelungsvorrichtung des betreffenden Rotorblattes übergeben werden. Die Regelegungsvorrichtung kann davon abhängig die Blattverstelleinrichtung ansteuern, nämlich insbesondere so, dass die durch den Lastsensor erfasste Belastung minimiert, zumindest reduziert wird.

Es wird somit nicht in jedem Fall ein Verstellen des wenigstens einen Rotorblattes durchgeführt, sondern nur bei besonders starken Böen und/oder bei Böen mit einer stark von der Hauptwindrichtung abweichenden Richtung. Die Stärke der Böe kann auch über eine Belastungserfassung einer Belastung besonders am Rotorblatt erfasst werden.

Dazu kann gemäß einem Aspekt eine vorbestimmte Böengrenzwindgeschwindigkeit zugrundegelegt werden. Wird diese überschritten, wird das Verstellen initiiert. Außerdem oder alternativ kann eine vorbestimmte Windgeschwindigkeitsdifferenz als Kriterium zugrundegelegt werden. Dann wird nicht auf eine absolute Geschwindigkeit der Böe geprüft, sondern wie stark oder wie weit sie über der mittleren Windgeschwindigkeit des vorherrschenden Windes liegt. Hier kann bspw. ein Zehnminutenmittel der erfassten Windgeschwindigkeit zugrundegelegt werden. Hiermit wird im Grunde auch eine Schwankungsstärke der Windgeschwindigkeit berücksichtigt. Es können auch beide Kriterien zugleich geprüft und zugrundegelegt werden, in dem bspw. ein Verstellen erst erfolgt, wenn die Böengrenzwindgeschwindigkeit und die Windgeschwindigkeitsdifferenz überschritten wird. In diesem Fall kann es aber zweckmäßig sein, die Böengrenzwindgeschwindigkeit und/oder die Windgeschwindigkeitsdifferenz jeweils auf einen niedrigeren Wert festzulegen.

Ein weiterer Aspekt schlägt vor, zu prüfen, wie stark die Böenwindrichtung von der Hauptwindrichtung abweicht. Dazu wird die vorbestimmte Windrichtungsdifferenz zugrundegelegt. Hier fließt die Erkenntnis ein, dass eine besonders starke Abweichung von der Hauptwindrichtung als eine sog. Schräganströmung besonders gefährlich zumindest besonders belastend sein kann. Auch dieser Aspekt kann mit den beiden vorgenannten Aspekten kombiniert werden. Eine Möglichkeit besteht darin, dass alle Kriterien zugleich erfüllt werden, wobei vorzugsweise die entsprechenden vorbestimmten Grenzwerte entsprechend angepasst also verringert sind. Es kommt auch in Betracht, die Böenwindgeschwindigkeit und/oder die mittlere Windgeschwindigkeit überschreitende Böenwindgeschwindigkeit und/oder die Böenwindrichtung jeweils mit einem Gewichtungsfaktor versehen aufzuaddieren und mit einem gemeinsamen Kriterium als Grenze zu vergleichen. Dieses gemeinsame Kriterium kann dann entsprechend eine Summe der vorbestimmten Böengrenzwindgeschwindigkeit, der vorbestimmten Windgeschwindigkeitsdifferenz und/oder der vorbestimmten Windrichtungsdifferenz sein, jeweils mit einem Gewichtungsfaktor multipliziert. Die Gewichtungsfaktoren können auch jeweils die unterschiedlichen physikalischen Einheiten, nämlich Windgeschwindigkeit einerseits und Windrichtung andererseits berücksichtigen.

Die Erfassung der Böe und ihrer Windgeschwindigkeit als auch der Böenwindrichtung besonders für die Überprüfung, ob ein Verstellen des wenigstens eines Rotorblattes erfolgen soll, kann auch basierend auf einer Belastungsmessung an wenigstens einem Rotorblatt erfolgen. Der Betriebssteuerung ist grundsätzlich die Ausrichtung des Rotors in der Azimutstellung bekannt, als auch der jeweils eingestellte Blattwinkel. Außerdem ist auch die jeweilige Position des Rotors in seiner eigenen Drehrichtung bekannt. Mit anderen Worten ist also bekannt, in welcher Position sich die Rotorblätter jeweils befinden, nämlich bezogen auf die Drehung des Rotors um die Rotorachse. Mit diesen Informationen kann aus einer Belastung am Rotorblatt auch Windgeschwindigkeit und Windrichtung im Bereich des Rotorblattes abgeschätzt werden. Damit können daraus auch die genannten Kriterien für die Böe abgeschätzt werden.

Im Übrigen sind die genannten Kriterien, ab denen eine Verstellung des Rotorblattes erfolgen soll, Mindestkriterien, die dann sofort zu einer Verstellung des Rotorblattes führen sollen, wenn sie überschritten werden. Mit anderen Worten geht es nicht unbedingt darum, die betreffende Böe zunächst auszumessen, sondern nur darum, festzustellen, ob sie eine Schwelle überschreitet. Ist diese Schwelle überschritten, wird das Verstellen des Rotorblattes initiiert und danach kann die Böe auch noch in ihrer Windgeschwindigkeit weiter ansteigen.

Besonders das Aktivieren eines vorstehend oder nachstehend beschriebenen Entlastungsmodus kommt auch für einen Netzausfall in Betracht, in dem die Windenergieanlage plötzlich nicht mehr elektrische Leistung in das elektrische Versorgungsnetz einspeisen kann und deswegen in einem Trudelbetrieb betrieben wird. Besonders hierfür wird vorgeschlagen, den Entlastungsmodus nicht in jedem Fall zu aktivieren, denn besonders in diesem Fall kommt auch in Betracht, dass gar kein Sturmfall vorliegt und daher gar nicht mit extremen Belastungen zu rechnen ist.

Vorzugsweise ist die belastungsarme Ausrichtung des Rotors in seiner Azimutposition eine Ausrichtung, die in Hauptwindrichtung weist. Demnach wird vorgeschlagen, dass die Windenergieanlage somit in ihrer Azimutposition immer möglichst in Hauptwindrichtung ausgerichtet wird. Die Hauptwindrichtung kann hierbei bspw. mit einem bleibenden Mittelwert berücksichtigt werden, so dass bei einer schräganströmenden Böe, die vielleicht 10 oder 20 Sekunden dauert, eine Nachführung der Azimutposition unterbleibt oder zumindest zurückhaltender durchgeführt wird, also nicht mit maximal möglicher Verstellgeschwindigkeit der Azimutverstellung und/oder nicht sofort durchgeführt werden muss.

Vorzugsweise wird die Böe nach Windgeschwindigkeit und Windrichtung erfasst. Es kann vorteilhaft sein, dass das beschriebene belastungsabhängige Verstellen des wenigstens einen Rotorblattes im Trudelbetrieb überhaupt erst aktiviert wird, wenn wenigstens eine starke Böe aufgetreten ist. Eine starke Böe ist insoweit eine, die wenigstens eins der oben erläuterten Kriterien erfüllt. Bspw. kann ein solches belastungsabhängiges Blattverstellen im Trudelbetrieb zunächst deaktiviert sein, bis eine entsprechend starke Böe aufgetreten ist. Dabei kann in Kauf genommen werden, dass auf eine solche erste starke Böe noch keine belastungsabhängige Verstellung im Trudelbetrieb durchgeführt wird oder diese ggf. erst verspätet durchgeführt wird. Dabei wird berücksichtigt, dass solche belastenden Böen im Wesentlichen die Laufzeit einer Windenergieanlage verkürzen können, meist aber nicht durch ein einmaliges Auftreten die Windenergieanlage unmittelbar schädigen können. Es kann somit also ausreichen, wenn nach einer starken, die Windenergieanlage belastenden Böe erst die weiteren nachfolgenden Böen durch das vorgeschlagene Verstellen der Rotorblätter berücksichtigt werden.

Es kommt auch in Betracht, dass eine Böe nach Windgeschwindigkeit und Windrichtung allgemein in Bezug auf die Windenergieanlage betrachtet wird, dass also noch nicht betrachtet wird, inwieweit diese Böe über die Rotorfläche, die der Rotor im Betrieb überstreicht verteilt ist. Es wird also zunächst für die Windenergieanlage insgesamt geprüft, ob eine die Windenergieanlage insgesamt stark belastende Windböe auftritt und entsprechend auch mit weiteren solchen Windböen zu rechnen ist. Dann kann ein Entlastungsmodus aktiviert werden. Als Entlastungsmodus wird hier der Modus bezeichnet, in dem wenigstens eines der Rotorblätter, die Rotorblätter also individuell in ihrem Blattwinkel so verstellt werden, dass eine durch eine Böe verursachte Belastung verringert, insbesondere minimiert wird. Es wird somit vorgeschlagen, dass dieser Entlastungsmodus für die Windenergieanlage insgesamt aktiviert oder deaktiviert wird, dass im Falle des aktivierten Entlastungsmodus aber das belastungsreduzierende Verstellen für jedes Rotorblatt individuell durchgeführt wird.

Durch ein Vorabprüfen, ob überhaupt eine die Windenergieanlage stark belastende Böe auftritt oder zu erwarten ist, kann ein übermäßiger Betrieb der Verstellantriebe zum Verstellen der Rotorblätter in ihrem Anstellwinkel vermieden werden.

Erfindungsgemäß wird auch ein Verfahren zum Auslegen einer Windenergieanlage vorgeschlagen. Für dieses Verfahren wird ebenfalls eine Windenergieanlage mit einem aerodynamischen Rotor mit in ihrem Blattwinkel verstellbaren Rotorblättern zugrundegelegt, bei der auch der aerodynamische Rotor bzw. die diesen Rotor tragende Gondel in der Azimutrichtung verstellbar ist. Für diese Auslegung wird eine zu erwartende reduzierte Anlagenbelastung für einen 50-Jahressturmfall und/oder einen Jahressturmfall ermittelt.

Dieser zu erwartenden reduzierten Anlagenbelastung wird ein besonderer Betriebszustand zugrundegelegt, in dem nämlich zum Eigenschutz die Windenergieanlage in einen Trudelbetrieb gebracht wird, der Rotor in seiner Azimutposition in eine belastungsarme Ausrichtung zum Wind ausgerichtet wird, in der die Windenergieanlage möglichst wenig Belastung durch den Wind aus einer Hauptrichtung erfährt, und jedes Rotorblatt so in einem Blattwinkel verstellt wird, dass jedes Rotorblatt jeweils eine möglichst geringe Belastung durch eine im Bereich des Rotors wirkende Böe erfährt.

Entsprechend wird die Windenergieanlage auf die so ermittelte zu erwartende reduzierte Anlagenbelastung ausgelegt. Besonders wird hier davon ausgegangen, dass die Windenergieanlage wie oben gemäß wenigstens einer Ausführungsform beschrieben betrieben wird, dass also besonders ein belastungsarmer Betrieb durch einen Entlastungsmodus durchgeführt wird. Dadurch kann nicht nur die Windenergieanlage insgesamt weniger Belastungen ausgesetzt sein, sondern es wurde erkannt, dass dies auch bei der Auslegung der Windenergieanlage berücksichtigt werden kann. Es wird darauf hingewiesen, dass davon auszugehen ist, dass bei einer Windsituation, in der der genannten 50-Jahressturmfall auftritt, insbesondere wenn mit einer sog. 50-Jahresböe gerechnet werden kann, der Entlastungsmodus bereits aktiviert wurde. Selbst ein solcher Sturmfall entwickelt sich über eine gewisse Zeit und bis dahin werden selbst die genannten Kriterien zum Aktivieren des Entlastungsmodus erfüllt sein, sofern überhaupt diese Ausführungsform gewählt wird, bei der der Entlastungsmodus nur unter bestimmten Situationen aktiviert wird. Gleiches gilt für den Jahressturmfall.

Gemäß einer Ausführungsform wird vorgeschlagen, dass das Ermitteln der zu erwartenden reduzierten Anlagenbelastung über eine Lastsimulation erfolgt. Eine solche Lastsimulation kann das Belastungskollektiv auf die Windenergieanlage betrachten und auch verschiedene Windsituationen berücksichtigen. Sie kann auch eine Verteilung unterschiedlicher Windsituationen, also auch unterschiedlicher Sturmfälle berücksichtigen, wie sie an dem geplanten Standort zu erwarten sind. Solche Lastsimulationen sind grundsätzlich bekannt und werden regelmäßig durchgeführt. Hier wird vorgeschlagen, für diese Lastsimulationen besonders die beschriebene Betriebsführung unter Verwendung des beschriebenen Entlastungsmodus zugrundezulegen. Die Lastsimulation berücksichtigt dann also, dass die Rotorblätter eine entsprechend schwächere Belastung durch besonders ungünstige schräganströmende Böen erfährt. Entsprechend ist in dem Zusammenhang mit einer geringeren Belastung zu rechnen. Die Lastsimulation kann das aufnehmen und es kann dadurch besonders geprüft werden, ob eine kostengünstigere Auslegung dann gleichwohl eine ausreichende Auslegung sein kann.

Zusätzlich oder anstelle eines 50-Jahressturmfalls kann auch ein Jahressturmfall berücksichtigt werden. Ein solcher Jahressturmfall, der also einmal pro Jahr zu erwarten ist, stellt auch eine Belastung der Windenergieanlage dar, die die Auslegung der Windenergieanlage maßgeblich beeinflussen kann. Auch für diesen Jahressturmfall wird somit die zu erwartende reduzierte Anlagenbelastung berücksichtigt, die sich aufgrund der Verwendung eines Entlastungsmodus einstellt. Besonders für die Berücksichtigung der Gesamtbelastung, besonders der Lastkollektive für die gesamte zugrundegelegte Lebensdauer der Windenergieanlage wird vorgeschlagen, sowohl den 50-Jahressturmfall als auch den Jahressturmfall zu berücksichtigen.

Erfindungsgemäß wird auch eine Windenergieanlage vorgeschlagen, die einen aerodynamischen Rotor mit in ihren Blattwinkel verstellbaren Rotorblättern aufweist, wobei der aerodynamische Rotor in seiner Azimutrichtung verstellbar ist. Die Windenergieanlage ist dazu vorbereitet ein Verfahren zum Betreiben gemäß wenigstens einer dazu vorstehend beschriebenen Ausführungsform auszuführen. Insbesondere ist dazu ein entsprechender Prozessrechner in der Windenergieanlage vorgesehen. Auf dem können die genannten Schritte programmiert sein.

Außerdem weist die Windenergieanlage wenigstens einen, insbesondere wenigstens zwei Lastsensoren an jedem Rotorblatt auf. Solche Lastsensoren können an der Blattwurzel oder auch an einem Blattadapter angebracht werden, der das Rotorblatt mit der Rotornabe verbindet. Vorzugsweise sind die Belastungssensoren um die Rotorblätterlängsachse herum verteilt, insbesondere sind zwei um 90 Grad zueinander versetzt angeordnete Sensoren für jedes Rotorblatt vorgesehen. Damit kann eine Belastung auf das Rotorblatt auch der Richtung nach erfasst werden.

Es kann aber grundsätzlich auch ein einziger Sensor pro Blatt ausreichend sein. Vorzugsweise ist dieser so angeordnet, dass er eine Belastung quer zu einer Sehne eines Profils des Rotorblatts im Mittelbereich erfasst.

Vorzugsweise arbeitet der beschriebene Entlastungsmodus so, dass eine Blattverstellung so erfolgt, dass eine Belastung des betreffenden Rotorblattes minimiert wird. Dazu wird vorzugsweise nur der Messwert eines einzelnen Sensors zugrundegelegt. Es kommt auch in Betracht, dass dazu jeweils mehrere Sensoren verwendet werden, wobei dann gemäß einem Vorschlag die Messwerte beider Sensoren zu einem für die Regelung rückführbaren Messwert zusammengefasst werden. Es ist aber zu beachten, dass natürlich in jedem Fall eine Belastung auf das Rotorblatt wirkt, wenn der Wind weht, besonders wenn ein stürmischer Wind weht. Jegliche Belastung auf dem Rotorblatt kann damit nicht zu 0 ausgeregelt werden. Aber besonders Belastungen, die quer zur beschriebenen Sehne eines Profils des Rotorblattes auftreten, können je nach Richtung des angreifenden Windes ihr Vorzeichen wechseln. Anschaulich gesprochen kann sich das Rotorblatt in zwei Richtungen durchbiegen und eine dieser Richtungen kann als positiv und die andere als negative Belastung erfasst bzw. berücksichtigt werden.

Vorzugsweise arbeitet dann der Entlastungsmodus so, dass das jeweilige Rotorblatt so verstellt wird, dass sich das Rotorblatt im Idealfall gar nicht durchbiegt. Oftmals ist natürlich eine Verstellung des jeweiligen Rotorblattes ausreichend, bei der sich solche Durchbiegungen zumindest signifikant gegenüber einer Nichtverstellung verringert haben. Ein vollständiges und dauerhaftes Ausregeln solcher Belastungen, also der anschaulich beschriebenen Durchbiegungen, auf den Wert 0 wird schon aufgrund der sich dynamisch ändernden Windbedingungen ein kaum zu realsierender Idealfall bleiben. Gleichwohl kann eine solche Regelungsvorschrift formuliert werden, selbst wenn der Idealfall damit nicht erreicht wird.

Nachfolgend wird die Erfindung beispielhaft anhand von Ausführungsformen unter Bezugnahme auf die begleitenden Figuren näher erläutert.
- Fig. 1: zeigt eine Windenergieanlage in einer perspektivischen Darstellung.
- Fig. 2: zeigt schematisch ein Regelungsschema zum Umsetzen des Entlastungsmodus.
- Fig. 3: zeigt schematisch einen Ausschnitt aus einem Blattanschlussbereich als Prinzipskizze.
- Fig. 4: zeigt ein vereinfachtes Ablaufdiagramm besonders zum Aktivieren eines Entlastungsmodus.

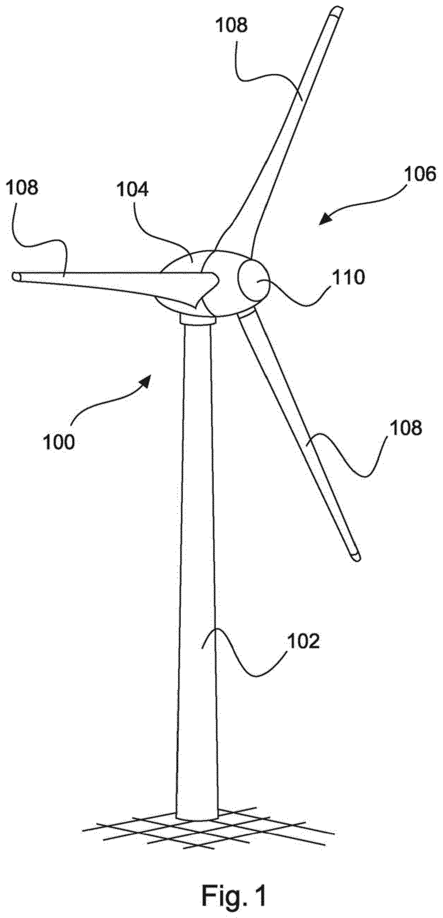

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

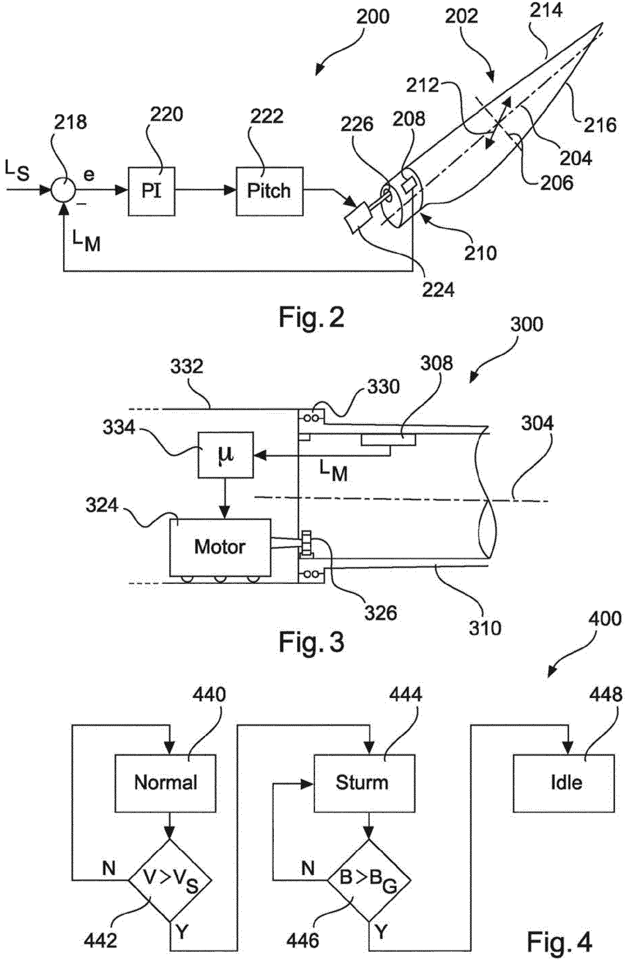

Figur 2 zeigt veranschaulichend eine Regelungsstruktur 200, die zur Umsetzung eines Entlastungsmodus den Blattwinkel des ebenfalls schematisch dargestellten Rotorblattes 202 regelt. Schematisch ist in dem Rotorblatt 202 eine Rotorblattlängsachse 204 als strichpunktierte Linie und ebenfalls sehr schematisch in einem mittleren Bereich des Rotorblattes 202 eine Sehne 206 gestrichelt eingezeichnet. Ebenfalls ist ein Lastsensor 208 im Wurzelbereich 210 des Rotorblattes 202 angedeutet.

Der Lastsensor 208 ist etwa so angeordnet, dass er eine Belastung aufnimmt, die auch einer Biegebewegung 212 des Rotorblattes 202 im Wesentlichen senkrecht zur Sehne 206 entspricht. Es geht hierbei also um eine Biegebewegung um eine Achse, die im Wesentlichen parallel zur Sehne 206 verläuft. Mit anderen Worten geht es um eine Biegebewegung bzw. korrespondierende Lastrichtung etwa in Richtung von einer Saugseite zu einer Druckseite bzw. umgekehrt und nicht um eine Richtung zwischen einer Vorderkante 214 und einer Hinterkante 216. Die Saug- und Druckseite lässt sich in der schematischen Darstellung der Figur 2 nicht sehr gut darstellen, so dass hier zur Abgrenzung auf die Vorder- und Hinterkante 214 bzw. 216 verwiesen wird.

Eine Belastung in einer solchen Richtung, die also der Biegebewegung 212 gemäß dem eingezeichneten Doppelpfeil entspricht, wird mit dem Lastsensor 208 aufgenommen. Der Lastsensor 208 erzeugt dazu ein entsprechendes Lastsignal, was hier als L_{M} dargestellt ist und an der Summierstelle 218 von einem Lastsollwert L_{S} abgezogen wird. Der Sollwert L_{S} kann vorzugsweise den Wert 0 aufweisen.

Diese Soll-Istwert-Differenz, die auch als e bezeichnet werden kann, wird dann in den PI-Regelungsblock 220 eingegeben. Ein PI-Regler wird besonders deswegen vorgeschlagen, damit auch eine Blattverstellung, die zu einer Minimierung der Belastung und damit des Lastsignals L_{M} geführt hat, beibehalten wird, selbst wenn die Regelabweichung e dann den Wert 0 aufweist. Es können aber auch andere Regler verwendet werden oder es kann bspw. auch ein weiterer Anteil wie bspw. ein D-Anteil ergänzt werden, um ggf. die Regelungsdynamik zu beeinflussen.

Das Ergebnis des PI-Regelungsblocks 220 wird dann auf den veranschaulichenden Pitchblock 222 gegeben, der mit dem ebenfalls nur schematisch dargestellten Pitchantrieb 224 zusammenwirkt. Der Pitchblock 222 und der Pitchantrieb 224 können eine Blattverstelleinrichtung bzw. einen Teil davon bilden. Der Pitchantrieb 224 führt dann über ein angedeutetes Ritzel 226 eine Verstellung des Blattwinkels durch, nämlich ein Verdrehen im Grunde um die Rotorblattlängsachse 204, sofern durch den PI-Regelungsblock 220 überhaupt ein entsprechendes Verstellsignal erzeugt wurde.

Figur 3 veranschaulicht in der schematischen Schnittdarstellung eines Rotorblattanschlussbereichs 300 eine mögliche bautechnische Anordnung des Schemas der Figur 2. Der Blattanschlussbereich 300 gemäß der Darstellung der Figur 3 umfasst einen Wurzelbereich 310 eines Rotorblattes, das dem Rotorblatt 202 der Figur 2 entsprechen könnte. Dieser Wurzelbereich 310 ist in einem Pitchlager 330 in einem Nabenabschnitt 332 drehbar gelagert. Die Rotorblattlängsachse 304 ist zur Veranschaulichung ebenfalls eingezeichnet.

Zur Erfassung einer Belastung ist ein Lastsensor 308 als Dehnungsmessstreifen veranschaulichend in dem Wurzelbereich 310 eingezeichnet. Die gezeigten Größenordnungen der Elemente, besonders des Lastsensors 308, gleiches gilt auch für den Lastsensor 208 der Figur 2, müssen nicht tatsächlichen Größenverhältnissen entsprechen und sind im Wesentlichen zum Zwecke einer guten Darstellung gewählt worden.

Mit dem Lastsensor 308 kann ein Lastsignal L_{M} erfasst werden und an eine Regelungsvorrichtung 334 übertragen werden. Die Regelungsvorrichtung 334 ist hier als Mikroprozessor dargestellt und kann einen Teil der Struktur der Figur 2 enthalten, besonders die dort dargestellte Summierstelle 218 und den PI-Regelungsblock 220. Auch der Pitchblock 222 könnte Teil der Regelungsvorrichtung 334 sein.

Mittels der Regelungsvorrichtung 334 kann dann der Pitchantrieb 324, der hier schematisch als Motor dargestellt ist, angesteuert werden. Etwaige Verstellvorgaben können dann über ein ebenfalls nur angedeutetes Ritzel 326 umgesetzt werden. Natürlich kommt auch eine Verstellung des Rotorblattwinkels über eine andere Mechanik als über einen Pitchantrieb mit Ritzel in Betracht. Figur 3 veranschaulicht, dass die Regelungsvorrichtung 334 im Bereich des Rotorblattes besonders im Blattanschlussbereich 300 angeordnet sein kann. Damit ist eine solche Regelungsvorrichtung 334 auch jeweils zu einem Rotorblatt vorgesehen und damit kann für jedes Rotorblatt individuell auf einfache Art und Weise eine entsprechende Steuerung, insbesondere Umsetzung des Entlastungsmodus durchgeführt werden.

Die schematische Ablaufstruktur 400 der Figur 4 geht grundsätzlich von einem Normalbetrieb der Windenergieanlage aus. Dies ist durch den Normalblock 440 veranschaulicht. Davon ausgehend wird in dem Sturmprüfblock 442 überprüft, ob die Windgeschwindigkeit V größer als eine Sturmwindgeschwindigkeit Vs ist. Ist das nicht der Fall, so wird der Normalbetrieb beibehalten und der Ablauf kehrt entsprechend zurück zum Normalblock 440.

Wird aber erkannt, dass die Windgeschwindigkeit entsprechend hoch ist, geht die Betriebsführung, die insoweit auch in dieser Ablaufstruktur 400 gezeigt ist, in den Sturmbetriebsmodus über, der hier durch den Sturmblock 444 veranschaulicht ist. Es ist zu beachten, dass dieser Sturmbetriebsmodus, den der Sturmblock 444 veranschaulicht, nicht den Sturmfall betrifft, bei dem die Windenergieanlage mit verringerter Leistung und/oder verringerter Drehzahl weiter betrieben wird, sondern in dem die Windenergieanlage nicht weiter betrieben wird und in einem Trudelbetrieb übergeht. Das Führen der Windenergieanlage in dem Trudelbetrieb ist somit ein Charakteristikum des hier betrachteten Sturmfalls, für den der Sturmblock 444 steht.

Darüber hinaus wird gemäß der Ablaufstruktur 400 dann in dem Böengrenzblock 446 geprüft, ob eine Böe B größer als eine Böengrenze B_{G} ist. Das kann bedeuten, dass eine Windgeschwindigkeit der Böe mit einer vorbestimmten Grenzwindgeschwindigkeit einer Böe verglichen wird und/oder ein Vergleich einer Windgeschwindigkeitserhöhung der Böe gegenüber einer vorherrschenden mittleren Windgeschwindigkeit mit einem vorbestimmten Grenzwert durchgeführt wird und/oder dass eine von der vorherrschenden Hauptwindrichtung abweichende Windrichtung der Böe betrachtet wird und diese Windrichtungsabweichung mit einer vorbestimmten Windrichtungsabweichungsgrenze verglichen wird.

Kommt bei diesem Vergleich heraus, dass die Böe B nicht größer als eine Böengrenze ist, so arbeitet der Sturmbetrieb im Grunde unverändert weiter. Die Struktur kehrt somit für diesen Fall von dem Böengrenzblock 446 zurück zum Sturmblock 444.

Ist aber in dem Böengrenzblock 446 erkannt worden, dass eine Böe größer als eine Böengrenze ist, so wird zusätzlich ein Entlastungsmodus aktiviert. Dafür steht der Idle-Block 448. In diesem Entlastungsmodus gemäß dem Idle-Block 448 wird dann eine Regelung aktiviert, wie bspw. schematisch in Figur 2 gezeigt ist. Mit anderen Worten wird gemäß dieser Ablaufstruktur 400 diese Regelung gemäß Figur 2 erst dann aktiviert, wenn dies durch den Böengrenzblock 446 ausgelöst wird. Im Sturmbetrieb gemäß dem Sturmblock 444 ist somit vorzugsweise die Regelung gemäß Figur 2 in der dort gezeigten Art und Weise noch nicht aktiv.

Es ist zu beachten, dass die Prüfung gemäß dem Sturmprüfblock 442 und auch die Prüfung gemäß dem Böengrenzblock 446 weiterhin durchgeführt werden. Die Prüfung gemäß dem Böengrenzblock 446 wird also auch im aktivierten Entlastungsmodus 448 weiterhin durchgeführt und entsprechend wird ggf. der Entlastungsmodus wieder deaktiviert. Vorzugsweise wird eine Prüfung gemäß dem Böengrenzblock 446 dann so durchgeführt, dass eine Deaktivierung des Entlastungsmodus erst erfolgt, wenn über eine längere Zeit, bspw. über eine Zeit von wenigstens 10 Minuten oder über eine Zeit von wenigstens einer Stunde kein Fall mehr aufgetreten ist, bei dem die Böe B nicht größer als die Böengrenze B_{G} war.

Ähnlich kann im Sturmbetrieb eine Prüfung im Sinne des Sturmprüfblocks 442 erfolgen und ggf. in den Normalbetrieb zurückgeschaltet werden.

Die beschriebene Erfindung betrifft besonders die Regelung einer Windenergieanlage bei hohen Windgeschwindigkeiten. Es ist bekannt, dass eine Windenergieanlage bei hohen Windgeschwindigkeiten den normalen Produktionsbetrieb einstellt und in den Trudelbetrieb wechselt. Dabei werden die Rotorblätter, die auch vereinfachend als Blätter bezeichnet werden können, aus dem Wind in eine so genannte Fahnenstellung gedreht, sodass diese der anströmenden Luft keine bzw. nur sehr wenig Energie entnehmen. Eine Anlage in Fahnenstellung dreht nicht oder nur wenig. Das wird hier als Trudeln oder Trudelbetrieb bezeichnet.

Es wurde erkannt, dass es bedingt durch die hohe Turbulenz im Wind dabei vorkommen kann, dass der Wind bzw. einzelne Wind-Böen nicht ideal von vorne auf die Anlage einwirken. Hinsichtlich dieser Böen steht die Anlage dann nicht mehr in Fahnenstellung und dem Wind wird Energie entnommen. Diese entnommene Energie resultiert in erhöhten Lasten auf die Anlage.

Die vorgeschlagene Lösung sieht hier vor, durch eine Regelung des Blattlastsignals die Fahnenstellung entsprechend anzupassen, indem das Lastsignal besonders mittels eines PI-Reglers gegen Null geregelt wird. Dies kann separat bzw. individuell für alle Blätter erfolgen. Durch die Regelung wird der jeweils optimale Blattwinkel bestimmt, dieser kann sich signifikant von der normalen Fahnenstellung bei 90° unterscheiden.

Die Regelung führt damit zu mitunter stark reduzierten Blattanschlusslasten bei Sturm. Die bei Sturm auftretenden Lasten können dimensionierend wirken, sodass eine Lastreduktion auch potentielle Kostensenkungen durch reduzierte Bauteillasten nach sich ziehen kann. Die Auslegung der Anlage kann also dadurch beeinflusst werden bzw. das kann bei der Auslegung berücksichtigt werden.

Zusätzlich zur Entwicklung und Implementierung des vorgeschlagenen Algorithmus wird gemäß einer Ausgestaltung auch eine Anpassung etwaiger Blattwinkelanschläge vorgeschlagen. Normalerweise sind die Blattwinkel, die auch als Pitchwinkel bezeichnet werden können, auf Werte nahe 90° begrenzt. Mit der nun vorgeschlagenen Lösung können sich jedoch auch Pitchwinkel > 90° als günstig erweisen, sodass ggf. konstruktive Änderungen am Blattverstellsystem, das eine Blattverstelleinrichtung und eine Winkelüberwachung beinhalten kann, vorgeschlagen werden.

Es wurde auch erkannt, dass im Sturm auftretende Böen nicht unbedingt der Hauptwindrichtung folgen, sodass diese Böen die Blätter mit einer starken Schräganströmung anströmen. Dies erzeugt mehr Auftrieb am Blatt als die Anströmung in Fahnenstellung, sodass es zu höheren Blattlasten kommt.

Es wird dazu vorzugsweise eine Böenerkennung implementiert, welche den Entlastungsmodus bei Bedarf aktiviert. Dieser regelt dann besonders bevorzugt den Blattwinkel mithilfe eines PI-Reglers hin zu minimalen Blattschlaglasten. Dies führt zu einer Korrektur der Blattwinkel abweichend von der Fahnenstellung.

Dadurch können sich stark reduzierte Blattanschlusslasten ergeben. Diese können auch die Extremlasten reduzieren. Solche Lastfälle können auch bei Anlagen dimensionierend sein, eine solche Reduzierung kann hier also direkten Einfluss auf die Konstruktion haben bzw. bei der Konstruktion berücksichtigt werden.

## Patentansprüche

1. Verfahren zum Betreiben einer Windenergieanlage (100), und
- die Windenergieanlage (100) weist einen aerodynamischen Rotor (106) mit einer Rotornabe und mit in ihrem Blattwinkel verstellbaren Rotorblättern (202) auf und
- der aerodynamische Rotor (106) ist in seiner Azimutrichtung verstellbar und das Verfahren umfasst die Schritte
- Erfassen eines Sturmfalls, in dem der vorherrschende Wind so stark ist, dass zum Eigenschutz die Windenergieanlage (100) in einen Trudelbetrieb gebracht wird,
- Ausrichten des Rotors (106) in seiner Azimutposition in eine belastungsarme Ausrichtung zum Wind, in der die Windenergieanlage (100) möglichst wenig Belastung durch den Wind aus einer Hauptwindrichtung erfährt,
- Erfassen wenigstens einer durch eine Böe verursachte, auf den Rotor wirkende Belastung (L_{M}),
- Verstellen wenigstens eines der Rotorblätter (202) in seinem Blattwinkel so, dass das wenigstens eine Rotorblatt (202) eine möglichst geringe Belastung durch die verursachende Böe erfährt, **dadurch gekennzeichnet, dass**
- das Verstellen des wenigstens einen Rotorblattes (202) in seinem Blattwinkel erst erfolgt, wenn die verursachende Böe eine Windgeschwindigkeit aufweist, die wenigstens um eine vorbestimmte Windgeschwindigkeitsdifferenz oberhalb einer mittleren Windgeschwindigkeit des vorherrschenden Windes liegt, und
- Aufheben einer Sicherheitsüberprüfung, die die Verstellung des wenigstens einen Rotorblattes (202) begrenzt , so dass jedes Rotorblatt (202) abhängig der erfassten Böe sowohl größere als auch kleinere Blattwinkel als die Fahnenstellung annehmen kann.

2. Verfahren nach Anspruch 1,
**dadurch gekennzeichnet, dass**
das wenigstens eine Rotorblatt (202) in Abhängigkeit einer erfassten Blattbelastung (L_{M}) verstellt wird und die erfasste Blattbelastung (L_{M}) in eine Lastregelung eingeht und die Lastregelung in Abhängigkeit der erfassten Belastung (L_{M}) den Blattwinkel des Rotorblattes (202) so verstellt, dass die Belastung (L_{M}) minimiert wird, insbesondere ist die Lastregelung als PI-Regler oder PD-Regler ausgeführt.

3. Verfahren nach Anspruch 1 oder 2, **dadurch gekennzeichnet, dass**
- für jedes Rotorblatt (202) wenigstens ein Lastsensor (208) am Rotorblatt (202) oder im Bereich einer Befestigung des Rotorblattes (202) an der Rotornabe vorgesehen ist und
- von dem wenigstens einen Lastsensor (208) ein Lastsignal (L_{M}) zu einer Regelungsvorrichtung (334) des Rotorblattes (202) zurückgeführt wird, um abhängig davon das Verstellen des Rotorblattes (202) durchzuführen, um eine durch dieses Lastsignal (L_{M}) erfasste Belastung (L_{M}) zu minimieren oder zumindest zu reduzieren.

4. Verfahren nach einem der vorstehenden Ansprüche,
**dadurch gekennzeichnet, dass**
beim Ausrichten des Rotors (106) in die belastungsarme Ausrichtung zum Wind die Rotorblätter (202) in eine Fahnenstellung gebracht werden und davon ausgehend jedes Rotorblatt (202) individuell in seinem Blattwinkel um eine Winkelabweichung zur Fahnenstellung verstellt wird.

5. Verfahren nach einem der vorstehenden Ansprüche,
**dadurch gekennzeichnet, dass**
die belastungsarme Ausrichtung eine Ausrichtung ist, die in Hauptwindrichtung weist.

6. Verfahren nach einem der vorstehenden Ansprüche,
**dadurch gekennzeichnet, dass**
die Böe nach Windgeschwindigkeit und Windrichtung erfasst wird.

7. Verfahren zum Auslegen einer Windenergieanlage (100) und
- die Windenergieanlage (100) weist einen aerodynamischen Rotor (106) mit in ihrem Blattwinkel verstellbaren Rotorblättern (202) auf und
- der aerodynamische Rotor (106) ist in seiner Azimutrichtung verstellbar und das Verfahren umfasst die Schritte
- Ermitteln einer zu erwartenden reduzierten Anlagenbelastung für einen 50-Jahres Sturmfall, und/oder einen Jahressturmfall, wobei ein Betriebszustand zu Grunde liegt,
- in dem zum Eigenschutz die Windenergieanlage (100) in einen Trudelbetrieb gebracht wird,
- der Rotor (106) in seiner Azimutposition in eine belastungsarme Ausrichtung zum Wind ausgerichtet wird, in der die Windenergieanlage (100) möglichst wenig Belastung durch den Wind aus einer Hauptwindrichtung erfährt, und
- jedes Rotorblatt (202) so in seinem Blattwinkel verstellt wird, dass es jeweils eine möglichst geringe Belastung durch eine im Bereich des Rotors (106) wirkenden Böe erfährt, **dadurch gekennzeichnet, dass**
- das Verstellen des wenigstens einen Rotorblattes (202) in seinem Blattwinkel erst erfolgt, wenn die verursachende Böe eine Windgeschwindigkeit aufweist, die wenigstens um eine vorbestimmte Windgeschwindigkeitsdifferenz oberhalb einer mittleren Windgeschwindigkeit des vorherrschenden Windes liegt, wobei
- zusätzlich das Aufheben einer Sicherheitsüberprüfung erfolgt, die die Verstellung des wenigstens einen Rotorblattes (202) begrenzt, so dass jedes Rotorblatt (202) abhängig der erfassten Böe sowohl größere als auch kleinere Blattwinkel als die Fahnenstellung annehmen kann , und wobei die Windenergieanlage (100) auf die so ermittelte zu erwartende reduzierte Anlagenbelastung ausgelegt wird.

8. Verfahren nach Anspruch 7,
**dadurch gekennzeichnet, dass**
das Ermitteln der zu erwartenden reduzierten Anlagenbelastung über eine Lastsimulation erfolgt.

9. Windenergieanlage (100) umfassend
- einen aerodynamischen Rotor (106) mit in ihrem Blattwinkel verstellbaren Rotorblättern (202), wobei
- der aerodynamische Rotor (106) in seiner Azimutrichtung verstellbar ist,
und wobei die Windenergieanlage (100) dazu vorbereitet ist, insbesondere einen dazu programmierten Prozessrechner (334) aufweist, ein Verfahren mit folgenden Schritten auszuführen:
- Erfassen eines Sturmfalls, in dem der vorherrschende Wind so stark ist, dass zum Eigenschutz die Windenergieanlage (100) in einen Trudelbetrieb gebracht wird,
- Ausrichten des Rotors (106) in seiner Azimutposition in eine belastungsarme Ausrichtung zum Wind, in der die Windenergieanlage (100) möglichst wenig Belastung durch den Wind aus einer Hauptwindrichtung erfährt,
- Erfassen wenigstens einer im Bereich des Rotors (106) wirkenden Böe und
- Verstellen wenigstens eines der Rotorblätter (202) in seinem Blattwinkel so, dass das wenigstens eine Rotorblatt (202) eine möglichst geringe Belastung (L_{M}) durch die erfasste Böe erfährt, **dadurch gekennzeichnet, dass**
- das Verstellen des wenigstens einen Rotorblattes (202) in seinem Blattwinkel erst erfolgt, wenn die verursachende Böe eine Windgeschwindigkeit aufweist, die wenigstens um eine vorbestimmte Windgeschwindigkeitsdifferenz oberhalb einer mittleren Windgeschwindigkeit des vorherrschenden Windes liegt, und
- Aufheben einer Sicherheitsüberprüfung, die die Verstellung des wenigstens einen Rotorblattes (202) begrenzt , so dass jedes Rotorblatt (202) abhängig der erfassten Böe sowohl größere als auch kleinere Blattwinkel als die Fahnenstellung annehmen kann.

10. Windenergieanlage (100) nach Anspruch 9,
**dadurch gekennzeichnet, dass**
sie dazu vorbereitet ist, ein Verfahren nach einem der Ansprüche 1 bis 9 auszuführen.

11. Windenergieanlage (100) nach Anspruch 9 oder 10,
**dadurch gekennzeichnet, dass**
- für jedes Rotorblatt wenigstens ein Lastsensor (208) am Rotorblatt (202) oder im Bereich einer Befestigung des Rotorblattes (202) an der Rotornabe vorgesehen ist und
- eine Signalübertragungseinrichtung vorgesehen ist, um von dem Lastsensor (208) ein Lastsignal zu einer Regelungsvorrichtung (334) des Rotorblattes (106) zurückzuführen, um abhängig davon das Verstellen des Rotorblattes (202) durchzuführen, um eine durch dieses Lastsignal (L_{M}) erfasste Belastung zu minimieren oder zumindest zu reduzieren.

12. Windenergieanlage (100) nach einem der Ansprüche 9 bis 11,
**dadurch gekennzeichnet, dass**
- für jedes Rotorblatt (202) eine Blattverstelleinrichtung (224) zum Verstellen des Blattwinkel des Rotorblattes (106) vorgesehen ist und
- für jedes Rotorblatt (106) eine eigene Regelungsvorrichtung (334) vorgesehen ist, um das Verstellen des Blattwinkels des Rotorblattes (202) zu bewirken, wobei
die Regelungsvorrichtung (334) dazu eingerichtet ist, ein bzw. das Lastsignal (L_{M}) von einem bzw. dem Lastsensor (208) zu empfangen und abhängig davon die Blattverstelleinrichtung (224) zu steuern, um das Verstellen des Blattwinkels zu bewirken, um eine durch dieses Lastsignal (L_{M}) erfasste Belastung (L_{M}) zu minimieren oder zumindest zu reduzieren.

## Claims

1. A method for operating a wind turbine (100), and
- the wind turbine (100) has an aerodynamic rotor (106) with a rotor hub and with rotor blades (202) of which the blade angle can be adjusted, and
- the aerodynamic rotor (106) can be adjusted in respect of its azimuth direction, and the method comprises the steps of
- detecting a storm situation in which the prevailing wind is so strong that the wind turbine (100) is moved to a coasting mode for self-protection purposes,
- orienting the rotor (106) in respect of its azimuth position into a low-loading orientation in relation to the wind, in which orientation the wind turbine (100) is subjected to as little loading as possible by the wind from a main wind direction,
- detecting at least one loading (L_{M}) which is caused by a gust of wind and acts on the rotor, and
- adjusting at least one of the rotor blades (202) in respect of its blade angle such that the at least one rotor blade (202) is subjected to as little loading as possible by the causative gust of wind,
**characterized in that**
- the adjustment of the at least one rotor blade (202) in respect of its blade angle is first performed, when the causative gust of wind has a wind speed which lies above an average wind speed of the prevailing wind at least by a predetermined wind speed difference, and
- eliminating a safety check, which limits the adjustment of the at least one rotor blade (202) such that each rotor blade (202) can assume both greater and also smaller blade angles than the feathered position, depending on the gust of wind detected.

2. The method as claimed in claim 1,
**characterized in that**
the at least one rotor blade (202) is adjusted depending on a detected blade loading (L_{M}) and the detected blade loading (L_{M}) is entered into a load control arrangement and the load control arrangement adjusts the blade angle of the rotor blade (202) depending on the detected loading (L_{M}) such that the loading (L_{M}) is minimized, in particular the load control arrangement is embodied as a PI controller or PD controller.

3. The method as claimed in claim 1 or 2, **characterized in that**
- at least one load sensor (208) is provided on the rotor blade (202) or in the region of a fastening of the rotor blade (202) to the rotor hub for each rotor blade (202), and
- a load signal (L_{M}) is fed back from the at least one load sensor (208) to a control apparatus (334) of the rotor blade (202) in order to carry out the adjustment of the rotor blade (202) depending on said load signal in order to minimize or at least to reduce a loading (L_{M}) which is detected by said load signal (L_{M}).

4. The method as claimed in one of the preceding claims,
**characterized in that**,
when orienting the rotor (106) into the low-loading orientation in relation to the wind, the rotor blades (202) are moved to a feathered position and, starting from this position, each rotor blade (202) is individually adjusted in respect of its blade angle about an angle deviation in relation to the feathered position.

5. The method as claimed in one of the preceding claims,
**characterized in that**
the low-loading orientation is an orientation which points in the main wind direction.

6. The method as claimed in one of the preceding claims,
**characterized in that**
the gust of wind is detected in respect of wind speed and wind direction.

7. A method for designing a wind turbine (100) and
- the wind turbine (100) has an aerodynamic rotor (106) with rotor blades (202) of which the blade angle can be adjusted, and
- the aerodynamic rotor (106) can be adjusted in respect of its azimuth direction, and the method comprises the steps of
- ascertaining an expected reduced turbine loading for a once-every-50-years storm situation and/or a once-a-year storm situation, wherein an operating state forms the basis,
- in which operating state the wind turbine (100) is moved to a coasting mode for self-protection purposes,
- the rotor (106) is oriented in respect of its azimuth position into a low-loading orientation in relation to the wind, in which orientation the wind turbine (100) is subjected to as little loading as possible by the wind from a main wind direction, and
- each rotor blade (202) is adjusted in respect of its blade angle such that it is in each case subjected to as little loading as possible by a gust of wind acting in the region of the rotor (106),
**characterized in that**
- the adjustment of the at least one rotor blade (202) in respect of its blade angle is first performed, when the causative gust of wind has a wind speed, which lies above an average wind speed of the prevailing wind at least by a predetermined wind speed difference, wherein
- in addition eliminating a safety check is performed, which limits the adjustment of the at least one rotor blade (202), such that each rotor blade (202) can assume both greater and also smaller blade angles than the feathered position, depending on the gust of wind detected, and wherein
the wind turbine (100) is designed for the expected reduced turbine loading ascertained in this way.

8. The method as claimed in claim 7,
**characterized in that**
ascertaining the expected reduced turbine loading is performed by means of a load simulation.

9. A wind turbine (100) comprising
- an aerodynamic rotor (106) with rotor blades (202) of which the blade angle can be adjusted, wherein
- the aerodynamic rotor (106) can be adjusted in respect of its azimuth direction, and wherein the wind turbine (100) is set up, in particular has a programmed process computer (334), for executing a method comprising the following steps:
- detecting a storm situation in which the prevailing wind is so strong that the wind turbine (100) is moved to a coasting mode for self-protection purposes,
- orienting the rotor (106) in respect of its azimuth position into a low-loading orientation in relation to the wind, in which orientation the wind turbine (100) is subjected to as little loading as possible by the wind from a main wind direction,
- detecting at least one gust of wind acting in the region of the rotor (106), and
- adjusting at least one of the rotor blades (202) in respect of its blade angle such that the at least one rotor blade (202) is subjected to as little loading (L_{M}) as possible by the gust of wind detected,
**characterized in that**
- the adjustment of the at least one rotor blade (202) in respect of its blade angle is first performed, when the causative gust of wind has a wind speed which lies above an average wind speed of the prevailing wind at least by a predetermined wind speed difference, and
- eliminating a safety check, which limits the adjustment of the at least one rotor blade (202) such that each rotor blade (202) can assume both greater and also smaller blade angles than the feathered position, depending on the gust of wind detected.

10. The wind turbine (100) as claimed in claim 9,
**characterized in that**
it is set up to execute a method as claimed in one of claims 1 to 9.

11. The wind turbine (100) as claimed in claim 9 or 10,
**characterized in that**
- at least one load sensor (208) is provided on the rotor blade (202) or in the region of a fastening of the rotor blade (202) to the rotor hub for each rotor blade, and
- a signal transmission device is provided in order to feed back a load signal from the load sensor (208) to a control apparatus (334) of the rotor blade (106) in order to carry out the adjustment of the rotor blade (202) depending on said load signal in order to minimize or at least to reduce a loading which is detected by said load signal (L_{M}).

12. The wind turbine (100) as claimed in one of claims 9 to 11,
**characterized in that**
- a blade adjustment device (224) for adjusting the blade angle of the rotor blade (106) is provided for each rotor blade (202), and
- a dedicated control apparatus (334) is provided for each rotor blade (106) in order to implement the adjustment of the blade angle of the rotor blade (202), wherein
the control apparatus (334) is designed to receive a or the load signal (L_{M}) from a or the load sensor (208) and to control the blade adjustment device (224) depending on said signal in order to implement the adjustment of the blade angle in order to minimize or at least to reduce a loading (L_{M}) which is detected by said load signal (L_{M}).

## Revendications

1. Procédé pour faire fonctionner une éolienne (100), et
- l'éolienne (100) présente un rotor (106) aérodynamique avec un moyeu de rotor et avec des pales de rotor (202) pouvant être ajustées dans leur angle de pale, et
- le rotor (106) aérodynamique peut être ajusté dans sa direction azimutale et le procédé comprend les étapes
- de détection d'un fort coup de vent, dans lequel le vent dominant est si fort que l'éolienne (100) est amenée dans un mode de vrille pour sa propre protection,
- d'orientation du rotor (106) dans sa position azimutale dans une orientation par rapport au vent à faible contrainte, dans laquelle l'éolienne (100) subit une contrainte aussi faible que possible provoquée par le vent provenant d'une direction principale du vent,
- de détection d'au moins une contrainte (L_{M}) provoquée par une rafale, agissant sur le rotor,
- d'ajustement d'au moins une des pales de rotor (202) dans son angle de pale de telle sorte que l'au moins une pale de rotor (202) subit une contrainte aussi faible que possible provoquée par la rafale, **caractérisé en ce que**
- l'ajustement de l'au moins une pale de rotor (202) dans son angle de pale est effectué seulement lorsque la rafale à l'origine de la contrainte présente une vitesse du vent qui est supérieure à une vitesse du vent moyenne du vent dominant d'au moins une différence de vitesse du vent prédéfinie, et
- l'annulation d'un contrôle de sécurité, qui limite l'ajustement de l'au moins une pale de rotor (202) si bien que chaque pale de rotor (202) peut adopter selon la rafale détectée à la fois des angles de pale plus importants et plus petits en tant que position en drapeau.

2. Procédé selon la revendication 1,
**caractérisé en ce que**
l'au moins une pale de rotor (202) est ajustée en fonction d'une contrainte de pale détectée (L_{M}) et la contrainte de pale (L_{M}) détectée se traduit par une régulation de charge, et la régulation de charge ajuste, selon la contrainte (L_{M}) détectée, l'angle de pale de la pale de rotor (202) de telle sorte que la contrainte (L_{M}) est minimisée, et particulier la régulation de charge est exécutée en tant que régulateur PI ou en tant que régulateur PD.

3. Procédé selon la revendication 1 ou 2, **caractérisé en ce que**
- est prévu pour chaque pale de rotor (202) au moins un capteur de charge (208) sur la pale de rotor (202) ou dans la zone d'une fixation de la pale de rotor (202) sur le moyeu de rotor, et
- un signal de charge (L_{M}) est ramené par l'au moins un capteur de charge (208) à un dispositif de régulation (334) de la pale de rotor (202) pour effectuer, en fonction, l'ajustement de la pale de rotor (202) pour minimiser ou du moins réduire une contrainte (L_{M}) détectée par ledit signal de charge (L_{M}).

4. Procédé selon l'une quelconque des revendications précédentes,
**caractérisé en ce que**
lors de l'orientation du rotor (106) dans la direction par rapport au vent à faible contrainte, les pales de rotor (202) sont amenées dans une position en drapeau, et, sur cette base, chaque pale de rotor (202) est ajustée individuellement dans son angle de pale d'un écart d'angle par rapport à la position en drapeau.

5. Procédé selon l'une quelconque des revendications précédentes,
**caractérisé en ce que**
l'orientation à faible contrainte est une orientation qui pointe dans la direction principale du vent.

6. Procédé selon l'une quelconque des revendications précédentes,
**caractérisé en ce que**
la rafale est détectée selon la vitesse du vent et la direction du vent.

7. Procédé destiné à concevoir une éolienne (100), et
- l'éolienne (100) présente un rotor (106) aérodynamique avec des pales de rotor (202) pouvant être ajustées dans leur angle de pale, et
- le rotor (106) aérodynamique peut être ajusté dans sa direction azimutale et le procédé comprend les étapes
- de détermination d'une contrainte d'installation réduite attendue pour un coup de vent survenant tous les 50 ans et/ou un coup de vent survenant une fois par an, dans lequel un état de fonctionnement est sous-jacent,
- dans lequel l'éolienne (100) est amenée dans un mode de vrille pour sa propre protection,
- le rotor (106) est orienté dans sa position azimutale dans une direction par rapport au vent à faible contrainte, dans laquelle l'éolienne (100) subit une contrainte aussi faible que possible provoquée par le vent provenant d'une direction principale de vent, et
- chaque pale de rotor (202) est ajustée de telle sorte, dans son angle de pale, qu'elle subit respectivement une contrainte aussi faible que possible provoquée par une rafale agissant dans la zone du rotor (106), **caractérisé en ce que**
- l'ajustement de l'au moins une pale de rotor (202) dans son angle de pale est effectué seulement lorsque la rafale à l'origine de la contrainte présente une vitesse du vent qui est supérieure à une vitesse du vent moyenne du vent dominant d'au moins une différence de vitesse de vent prédéfinie,
dans lequel
- en supplément l'annulation d'un contrôle de sécurité, qui limite l'ajustement de l'au moins une pale de rotor (202) est effectuée de sorte que chaque pale de rotor (202) peut adopter, selon la rafale détectée, à la fois des angles de pale plus importants et plus petits que la position en drapeau, et dans lequel
l'éolienne (100) est conçue sur la contrainte d'installation réduite attendue déterminée.

8. Procédé selon la revendication 7,
**caractérisé en ce que**
la détermination de la contrainte d'installation réduite attendue est effectuée par l'intermédiaire d'une simulation de charge.

9. Eolienne (100) comprenant
- un rotor (106) aérodynamique avec des pales de rotor (202) pouvant être ajustées dans leur angle de pale, dans laquelle
- le rotor (106) aérodynamique peut être ajusté dans sa direction azimutale,
et dans laquelle l'éolienne (100) est préparée pour exécuter un procédé et présente en particulier un ordinateur de processus (334) programmé à cet effet, lequel procédé comprend des étapes suivantes :
- de détection d'un coup de vent, dans lequel le vent dominant est si fort que l'éolienne (100) est amenée dans un mode de vrille pour sa propre protection,
- d'orientation du rotor (106) dans sa position azimutale dans une orientation par rapport au vent à faible contrainte, dans laquelle l'éolienne (100) subit une contrainte aussi faible que possible provoquée par le vent provenant d'une direction principale du vent,
- de détection d'au moins une rafale agissant dans la zone du rotor (106) et
- d'ajustement d'au moins une des pales de rotor (202) dans son angle de pale de telle sorte que l'au moins une pale de rotor (202) subit une contrainte (L_{M}) aussi faible que possible provoquée par la rafale détectée, **caractérisée en ce que**
- l'ajustement de l'au moins une pale de rotor (202) dans son angle de pale est effectué d'abord lorsque la rafale à l'origine de la contrainte présente une vitesse du vent qui est supérieure à une vitesse du vent moyenne du vent dominant d'au moins une différence de vitesse du vent prédéfinie,
et
- l'annulation d'un contrôle de sécurité, qui limite l'ajustement de l'au moins une pale de rotor (202) si bien que chaque pale de rotor (202) peut adopter, selon la rafale détectée, à la fois des angles de pale plus importants et plus petits que la position en drapeau.

10. Eolienne (100) selon la revendication 9,
**caractérisée en ce que**
elle est préparée pour exécuter un procédé selon l'une quelconque des revendications 1 à 9.

11. Eolienne (100) selon la revendication 9 ou 10,
**caractérisée en ce que**
- pour chaque pale de rotor, au moins un capteur de charge (208), sur la pale de rotor (202) ou dans la zone d'une fixation de la pale de rotor (202) sur le moyeu de rotor, est prévu, et
- un système de transfert de signaux est prévu pour ramener un signal de charge à un dispositif de régulation (334) de la pale de rotor (106) par le capteur de charge (208) pour mettre en œuvre, en fonction, l'ajustement de la pale de rotor (202) pour minimiser ou du moins réduire une contrainte détectée par ledit signal de charge (L_{M}).

12. Eolienne (100) selon l'une quelconque des revendications 9 à 11,
**caractérisée en ce que**
- pour chaque pale de rotor (202), un système d'ajustement de pale (224) est prévu pour ajuster l'angle de pale de la pale de rotor (106), et
- pour chaque pale de rotor (106), un dispositif de régulation (334) propre est prévu pour entraîner l'ajustement de l'angle de pale de la pale de rotor (202), dans laquelle
le dispositif de régulation (334) est mis au point pour recevoir un ou le signal de charge (L_{M}) d'un ou du capteur de charge (208) et pour commander, en fonction, le système d'ajustement de pale (224) pour entraîner l'ajustement de l'angle de pale pour minimiser ou du moins pour réduire une contrainte (L_{M}) détectée par ledit signal de charge (L_{M}).
